(19) Europäisches Patentamt / European Patent Office / Office européen des brevets

(11) **EP 4 360 839 A1**

(12) **EUROPEAN PATENT APPLICATION**

(43) Date of publication:
**01.05.2024 Bulletin 2024/18**

(21) Application number: **22204704.5**

(22) Date of filing: **31.10.2022**

(51) International Patent Classification (IPC):
**B28B 3/02** *(2006.01)*  **B22F 3/105** *(2006.01)*
**B28B 3/08** *(2006.01)*  **B28B 11/24** *(2006.01)*
**B30B 11/04** *(2006.01)*  **B30B 15/34** *(2006.01)*
**C04B 35/44** *(2006.01)*  **C04B 35/645** *(2006.01)*
**B22F 3/14** *(2006.01)*

(52) Cooperative Patent Classification (CPC):
(C-Sets available)
**B28B 3/025; B28B 3/086; B28B 11/243;**
**B30B 9/28; B30B 11/04; B30B 15/34; C04B 35/44;**
**C04B 35/645;** B22F 3/105; B22F 2003/1051;
B22F 2999/00; C04B 2235/666; C04B 2235/95

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Heraeus Conamic North America LLC**
**Chandler, AZ 85226 (US)**

(72) Inventors:
• **Walker, Luke**
  **Chandler, AZ 85226 (US)**
• **Donelon, Matthew J.**
  **Chandler, AZ 85226 (US)**

(74) Representative: **Gille Hrabal**
**Partnerschaftsgesellschaft mbB**
**Patentanwälte**
**Brucknerstraße 20**
**40593 Düsseldorf (DE)**

(54) **A SINTERING DEVICE HAVING LOW SURFACE ROUGHNESS**

(57)    A device having a sintering chamber (013), the sintering chamber (013) being bordered by the following device parts:

i. a first punch surface (004) of a first punch (003);

ii. a second punch surface (007) of a second punch (008); and

iii. an interior surface (005) of a die (006);

wherein:

the punches (003, 008) are adapted and arranged to apply a pressure of at least 1 MPa along a compression axis (011) to a target in the sintering chamber (013);

the first punch (003) and the second punch (008) are connected to an electrical power source (012) adapted and arranged to provide a current of at least 10 kA;

the first and second punches (003, 008) comprise at least 50 wt. % carbon, based on the total weight of the punch (003, 008);

the sintering chamber (013) has a cross-sectional width W perpendicular to the compression axis (011) of at least 300 mm;

wherein the die has a surface portion X at least 5 $cm^2$ in area, wherein the surface portion $\chi$ is located on the interior surface of the die and wherein the surface portion $\chi$ has a mean surface roughness (Sa) in the range from 1 $\mu m$ to 8 $\mu m$.

Figure 1A    100

**(Cont. next page)**

(52) Cooperative Patent Classification (CPC): (Cont.)

C-Sets
B22F 2999/00, B22F 2003/1051, B22F 3/003

**Description**

**FIELD OF THE INVENTION**

The invention relates in general to sintering under pressure and with electrical current, often termed spark plasma sintering (SPS). Particular aspects of the invention are directed to a sintering device, a sintering process, a ceramic body product, an assembly comprising the ceramic body and the use of a low surface roughness for the die of the device in a sintering process.

**BACKGROUND OF THE INVENTION**

Sintering methods provide a route to forming bodies from particles through application of heat and pressure. In one method, often referred to as Spark Plasma Sintering (SPS), heating is achieved using an electric current. The spark plasma sintering method in the state of the art has been applied to various materials. Existing literature focuses on small-scale systems, providing access to parts having physical extensions of up to around 150mm. The question of preparing larger parts using SPS is assessed from a theoretical standpoint by Eugene A. Olevsky et al. in "Fundamental Aspects of Spark Plasma Sintering: I. Experimental Analysis of Scalability" (J. Am. Ceram. Soc., 95 [8], 2406 to 2413 (2012)) and "Fundamental Aspects of Spark Plasma Sintering: II. Experimental Analysis of Scalability" (J. Am. Ceram. Soc., 95 [8], 2414 to 2422 (2012)). A number of potential challenges and complications in relation to large-scale systems were identified.

**SUMMARY OF THE INVENTION**

It is an object of this invention to provide an improved process for preparing a ceramic body. It is a particular object of this invention to an improved process for preparing ceramic bodies of increased size.
It is an object of this invention to provide an improved process for preparing a ceramic body having reduced energy requirements.
It is an object of this invention to provide an improved process for preparing a ceramic body having a reduced rejection rate.
It is an object of this invention to provide an improved process for preparing a ceramic body having reduced susceptibility to fracturing.
It is an object of this invention to provide an improved process for preparing a ceramic body having reduced internal stress.
It is an object of this invention to provide an improved process for preparing a ceramic body having increased mechanical strength.
It is an object of this invention to provide an improved process for preparing a ceramic body having increased density.
It is an object of this invention to provide an improved process for preparing a ceramic body having increased homogeneity of density.
It is an object of this invention to provide an improved process for preparing a ceramic body having increased etch resistance.
It is an object of this invention to provide an improved process for preparing a ceramic body having reduced surface roughness.
It is an object of this invention to provide a device for performing the aforementioned improved processes.
A contribution to at least partially fulfilling at least one of the above-mentioned objects is made by any of the embodiments of the invention.
A 1st embodiment of the invention is a device having a sintering chamber, the sintering chamber being bordered by the following device parts:

> i. a first punch surface of a first punch;
> ii. a second punch surface of a second punch; and
> iii. an interior surface of a die;
>
> wherein:
>
>> the punches are adapted and arranged to apply a pressure of at least 1 MPa along a compression axis to a target in the sintering chamber, preferably at least 5 MPa, more preferably at least 10 MPa, most preferably at least 15 MPa. The punches may be adapted and arranged to apply up to 50 MPa, or even more;

the first punch and the second punch are connected to an electrical power source adapted and arranged to provide a current of at least 10 kA, more preferably at least 50 kA, most preferably at least 60 kA. The electrical power source might be adapted and arranged to provide a current of up to 100 kA, or even more;

the first and second punches comprise at least 50 wt. % carbon, based on the total weight of the punch, preferably at least 90 wt. %, more preferably at least 95 wt. %, most preferably at least 99 wt. %;

the sintering chamber has a cross-sectional width W perpendicular to the compression axis of at least 300 mm, preferably at least 500 mm, more preferably at least 700 mm. W might reach as high as 2000 mm or more. Preferably it is not more than 1500 mm, more preferably not more than 900 mm;

wherein the die has a surface portion $\chi$ at least 5 cm$^2$ in area, wherein the surface portion $\chi$ is located on the interior surface of the die and wherein the surface portion $\chi$ has a mean surface roughness (Sa) in the range from 1 $\mu$m to 8 $\mu$m, preferably in the range from 2 $\mu$m to 7 $\mu$m, and preferably in the range from 3 $\mu$m to 6 $\mu$m, and further preferably in the range from 3 $\mu$m to 5 $\mu$m.

In an aspect of the 1st embodiment, it is preferred that the surface portion $\chi$ is at least 10 cm$^2$ in area, more preferably at least 50 cm$^2$ in area, and further preferably at least 100 cm$^2$ in area.

In a preferred embodiment of the device, the first punch has a surface portion $\alpha$ at least 5 cm$^2$ in area, the surface portion $\alpha$ having a mean surface roughness (Sa) in the range from 1 $\mu$m to 8 $\mu$m, preferably in the range from 2 $\mu$m to 7 $\mu$m, and preferably in the range from 3 $\mu$m to 6 $\mu$m, and further preferably in the range from 3 $\mu$m to 5 $\mu$m. This preferred embodiment is a 2nd embodiment of the invention, that preferably depends on the 1st embodiment of the invention.

In an aspect of the 2nd embodiment, it is preferred that the surface portion $\alpha$ is at least 10 cm$^2$ in area, more preferably at least 50 cm$^2$ in area, and further preferably at least 100 cm$^2$ in area. In an aspect of the 2nd embodiment, it is preferred that the surface portion $\alpha$ at least partially overlaps with a die contact surface of the first punch.

In a preferred embodiment of the device, the surface portion $\alpha$ at least partially overlaps with the first punch surface. This preferred embodiment is a 3rd embodiment of the invention, that preferably depends on the 2nd embodiment of the invention.

In a preferred embodiment of the device, the surface portion $\alpha$ at least partially contacts with the surface portion $\chi$. This preferred embodiment is a 4th embodiment of the invention, that preferably depends on the 3rd embodiment of the invention.

In a preferred embodiment of the device, the second punch has a surface portion $\beta$ at least 5 cm$^2$ in area, the surface portion $\beta$ having a mean surface roughness (Sa) in the range from 1 $\mu$m to 8 $\mu$m, preferably in the range from 2 $\mu$m to 7 $\mu$m, and preferably in the range from 3 $\mu$m to 6 $\mu$m, and further preferably in the range from 3 $\mu$m to 5 $\mu$m. This preferred embodiment is a 5th embodiment of the invention, that preferably depends on any of the 1st to 4th embodiments of the invention. In an aspect of the 5th embodiment, it is preferred that the surface portion $\beta$ is at least 10 cm$^2$ in area, more preferably at least 50 cm$^2$ in area, and further preferably at least 100 cm$^2$ in area. In an aspect of the 5th embodiment, it is preferred that the surface portion $\beta$ at least partially overlaps with a die contact surface of the second punch. In an aspect of the 5th embodiment, it is preferred that the surface portion $\beta$ at least partially contacts with the surface portion $\chi$.

In a preferred embodiment of the device, the surface portion $\beta$ at least partially overlaps with the second punch surface. This preferred embodiment is a 6th embodiment of the invention, that preferably depends on the 5th embodiment of the invention.

In a preferred embodiment of the device, the surface portion $\chi$ has at least one or all of the following properties:

a. a maximum height (Sz) in the range of 20 $\mu$m to 100 $\mu$m, preferably in the range of 35 $\mu$m to 87 $\mu$m, and further preferably in the range of 44 $\mu$m to 62 $\mu$m;
b. a texture aspect ratio (Str) in the range of 0.01 to 0.75, preferably in the range of 0.1 to 0.65, and more preferably in the range of 0.41 to 0.5;
c. an arithmetic mean peak curvature (Spc) of at least 4000 mm$^{-1}$, preferably at least 7000 mm$^{-1}$, and further preferably at least 8000 mm$^{-1}$;
d. a developed interfacial are ratio (Sdr) of at least 4, more preferably at least 12, and further preferably at least 14.

This preferred embodiment is a 7th embodiment of the invention, that preferably depends on any of the 1st to 6th embodiments of the invention. In an aspect of the 7th embodiment, all possible combination of the features a. to d. are preferred aspects of the embodiment. These combinations are e.g., a; b; c; d; a+b; a+c; a+d; b+c; b+d; c+d; a+b+c; a+b+d; a+c+d; b+c+d; a+b+c+d.

In a preferred embodiment of the device, the surface portion $\alpha$ and/or the surface portion surface portion $\beta$ has at least one or all of the following properties:

a. a maximum height (Sz) in the range of 20 $\mu$m to 100 $\mu$m, preferably in the range of 35 $\mu$m to 87 $\mu$m, and further preferably in the range of 44 $\mu$m to 62 $\mu$m ;
b. a texture aspect ratio (Str) in the range of 0.01 to 0.75, preferably in the range of 0.1 to 0.65, and more preferably in the range of 0.41 to 0.5;
c. an arithmetic mean peak curvature (Spc) of at least 4000 mm$^{-1}$, preferably at least 7000 mm$^{-1}$, and further preferably at least 8000 mm$^{-1}$;
d. a developed interfacial are ratio (Sdr) of at least 4, more preferably at least 12, and further preferably at least 14.

This preferred embodiment is an 8$^{th}$ embodiment of the invention, that preferably depends on any of the 2$^{nd}$ to 7$^{th}$ embodiments of the invention. In an aspect of the 8$^{th}$ embodiment, all possible combination of the features a. to d. are preferred aspects of the embodiment. These combinations are e.g., a; b; c; d; a+b; a+c; a+d; b+c; b+d; c+d; a+b+c; a+b+d; a+c+d; b+c+d; a+b+c+d.

In a preferred embodiment of the device, both punches and the die are at least partially present in a vacuum chamber or in a non-oxidising atmosphere or both. This preferred embodiment is a 9$^{th}$ embodiment of the invention, that preferably depends on any of the 1$^{st}$ to 8$^{th}$ embodiments of the invention.

In a preferred embodiment of the device, the electrical power source is adapted and arranged to supply DC voltage. This preferred embodiment is a 10$^{th}$ embodiment of the invention, that preferably depends on any of the 1$^{st}$ to 9$^{th}$ embodiments of the invention.

In a preferred embodiment of the device, one or more of the following are satisfied:

a. The first punch is at least 99% wt. % carbon, based on the total weight of carbon atoms in any chemical form and the total weight of the first punch;
b. the second punch is at least 99% wt. % carbon, based on the total weight of carbon atoms in any chemical form and the total weight of the second punch;
c. The die comprises at least 50% wt. %, more preferably at least 90% wt. %, and further preferably at least 99% wt. % carbon, based on the total weight of carbon atoms in any chemical form and the total weight of the die.

This preferred embodiment is an 11$^{th}$ embodiment of the invention, that preferably depends on any of the 1$^{st}$ to 10$^{th}$ embodiments of the invention. In an aspect of the 11$^{th}$ embodiment, all possible combination of the features a. to c. are preferred aspects of the embodiment. These combinations are e.g., a; b; c; a+b; a+c; b+c; a+b+c.

In a preferred embodiment of the device, the device comprises one or more further device-parts selected from the list consisting of:

a. a housing;
b. a vacuum apparatus;
c. a hydraulic piston.

This preferred embodiment is a 12$^{th}$ embodiment of the invention, that preferably depends on any of the 1$^{st}$ to 11$^{th}$ embodiments of the invention. In an aspect of the 12$^{th}$ embodiment, all possible combination of the features a. to c. are preferred aspects of the embodiment. These combinations are e.g., a; b; c; a+b; a+c; b+c; a+b+c.

A 13$^{th}$ embodiment of the invention is a process for the preparation of a ceramic body, comprising the steps:

a. providing a plurality of particles;
b. providing a device according to the invention, preferably a device according to any of the 1$^{st}$ to 12$^{th}$ embodiments of the invention;
c. introducing the particles into the sintering chamber;
d. applying a pressure P in the range from 1 MPa to 50 MPa to the plurality of particles in the sintering chamber and an electrical current I in the range from 10 kA to 100 kA, more preferably in the range from 25 kA to 100 kA, even more preferably in the range from 50 kA to 100 kA, to obtain the ceramic body.

In a preferred embodiment of the process, the particles contain at least 30 wt. % yttrium in any chemical form, based on the total mass of yttrium atoms and the total mass of the particles, preferably at least 40 wt. %, more preferably at least 45 wt. %. This preferred embodiment is a 14$^{th}$ embodiment of the invention, that preferably depends on the 13$^{th}$ embodiment of the invention.

A 15$^{th}$ embodiment of the invention is a ceramic body obtainable by a process according to the invention, preferably the process according to the 13$^{th}$ or 14$^{th}$ embodiments of the invention.

In a preferred embodiment of the ceramic body, at least one or all of the following are satisfied for the ceramic body:

a. A value for density divided by theoretical density that is less than 1.0;
b. An average grain size of less than 5 $\mu$m, preferably less than 4.5 $\mu$m, more preferably less than 4 $\mu$m, and further preferably from 1 $\mu$m to 3 $\mu$m;
c. A standard deviation for the average grain size distribution that is in the range of 1.2 $\pm$ 2 mm to 2.8 $\pm$ 2 mm, preferably in the range of 1.6 $\pm$ 2 mm to 2.4 $\pm$ 2 mm, and more preferably in the range of 1.8 $\pm$ 2 mm to 2.2 $\pm$ 2 mm.

This preferred embodiment is a 16th embodiment of the invention, that preferably depends on the 15th embodiment of the invention. In an aspect of the 16th embodiment, all possible combination of the features a. to c. are preferred aspects of the embodiment. These combinations are e.g., a; b; c; a+b; a+c; b+c; a+b+c. In an aspect of the 16th embodiment, feature a., the value for density divided by theoretical density is preferably at least 0.9, more preferably at least 0.95, and further preferably at least 0.99.

A 17th embodiment of the invention is an assembly comprising a ceramic body according to the invention, preferably the ceramic body according to any of the 15th to 16th embodiments of the invention.

In a preferred embodiment of the assembly, the assembly is selected from the group consisting of:

a. A plasma etcher,
b. Plasma processing chamber (etch or deposition processes),
c. A wear plate for a bearing, and
d. A mill liner of a grinding mill.

This preferred embodiment is an 18th embodiment of the invention, that preferably depends on the 17th embodiment of the invention. In an aspect of the 18th embodiment, all possible combination of the features a. to d. are preferred aspects of the embodiment. These combinations are e.g., a; b; c; d; a+b; a+c; a+d; b+c; b+d; c+d; a+b+c; a+b+d; a+c+d; b+c+d; a+b+c+d.

A 19th embodiment of the invention is a use of a die for preparing a ceramic body having an extension of at least 300 mm by spark plasma sintering, wherein the die has a surface portion at least 5 cm$^2$ in area, the surface portion having a mean surface roughness (Sa) in the range from 1 $\mu$m to 8 $\mu$m, preferably in the range from 2 $\mu$m to 7 $\mu$m, and preferably in the range from 3 $\mu$m to 6 $\mu$m, and further preferably in the range from 3 $\mu$m to 5 $\mu$m. In an aspect of the 19th embodiment, it is preferred that the surface area is at least 10 cm$^2$ in area, more preferably at least 50 cm$^2$ in area, and further preferably at least 100 cm$^2$ in area.

## DETAILED DESCRIPTION

The following abbreviations are used in the description: AC (alternating current), DC (direct current).

### Sintering

The invention is directed to a sintering process. A preferred sintering process produces a body from particles through application of pressure and heat. It is preferred for heating to be through application of an electric current.

A preferred sintering increases the density of the plurality of particles to produce the body. The body preferably has a higher density than the plurality of particles. A preferred sintering produces a product body having a density at least 95%, preferably at least 99%, more preferably at least 99.9% of its theoretical density.

### Device

The device of the invention is adapted and arranged for sintering particles to produce a body. The device comprises at least a first punch, a second punch and a die. The device has a sintering chamber.

### Sintering chamber

The device of the invention has a sintering chamber. The sintering chamber is preferably adapted and arranged for accommodating a plurality of particles. The sintering chamber is preferably bordered by a first punch surface of a first punch, a second punch surface of a second punch and an interior surface of a die. The sintering chamber may be bordered by the first punch surface, the second punch surface and the interior surface only, or may additionally by bordered by one or more further surfaces. The sintering chamber is preferably bordered by the first punch surface, the second punch surface and the interior surface only.

The sintering chamber may have one or more symmetry planes or one or more axes of symmetry or both. The sintering chamber may have the form of a volume of revolution. The sintering chamber may be cylindrical.

**Punches**

The device of the invention has a first punch and a second punch. The first punch has a first punch surface, which borders the sintering chamber. The second punch has a second punch surface, which borders the sintering chamber. It is preferred for one or both of the punch surfaces to be substantially flat.

The punches are preferably adapted and arranged for applying a force to a target within the sintering chamber, preferably for producing an elevated pressure in the sintering chamber. The punches are preferably adapted and arranged for producing a pressure of at least 1 MPa in the sintering chamber, preferably at least 5 MPa, more preferably at least 10 MPa, most preferably at least 15 MPa. The punches may be adapted and arrange to apply up to 50 MPa, or even more.

The first and second punches are preferably positioned vertically above and below the sintering chamber respectively. The first and second punches are preferably adapted and arranged to move along a compression axis.

The punches are preferably conductive. The punches are preferably adapted and arranged to provide a current of at least 10 kA, more preferably at least 50 kA, most preferably at least 60 kA. The electrical power source might be adapted and arranged to provide a current of up to 100 kA, or even more.

The punches are preferably of a carbon material, most preferably of graphite. The punches preferably comprise at least 95 wt. % carbon, more preferably at least 99 wt. %, more preferably still at least 99.5 wt. % carbon. The punches may comprise one or more selected from: a layer and a region; of a material other than carbon.

**Die**

The device of the invention has a die. The die has an interior surface bordering the sintering chamber.

In one embodiment, the die is electrically conductive. It is preferred for the die to have an anisotropic electrical conductivity, preferably having a material orientation axis substantially aligned with the compression axis.

In one embodiment, the die comprises one or more elements selected from group 14 of the periodic table. Group 14 elements are sometimes also referred to as group IVA elements or group 4A elements. The die preferably comprises one or more selected from the group consisting of: C, Si, Ge, Sn & Pb, preferably selected from C, Si, Ge and Sn, most preferably selected from C & Si. C is the most preferred group 14 element. In one aspect of this embodiment, the die contains 50 wt % or more, based on the total weight of the die, of group 14 elements, more preferably 90 wt % or more, most preferably 95 wt % or more.

In one embodiment, the die contains at least 50 wt % C, based on the total weight of the die, preferably 90 wt. % or more, more preferably 95 wt. % or more, most preferably 99 wt. % or more. In one aspect of this embodiment, the die additionally comprises one or more further group 14 elements, preferably selected from Si, Ge, Sn & Pb, more preferably selected from Si, Ge & Sn, more preferably still selected from Si & Ge, most preferably Si. Further group 14 elements are preferably present with a total content of at least 0.1 wt. %, more preferably at least 1 wt. %, most preferably at least 2 wt. %. Elements other than C, Si, Ge, Sn & Pb in this embodiment are preferably present with a total content of not more than 1 wt. %, more preferably not more than 0.5 wt. %, most preferably not more than 0.1 wt. %.

The die is preferably of a carbon material, most preferably of graphite.

The die may be a single piece or multiple pieces, preferably a single piece. It is preferred that the die is a single contiguous body, more preferably a single cylindrical body. The die is preferably present as 2 to 10 pieces, more preferably 2 to 5 pieces, more preferably still 2 to 3 pieces, most preferably 2 pieces.

The die may have one or more symmetry planes or one or more axes of symmetry or both. The sintering chamber may have the form of a volume of revolution. The sintering chamber may be hollow cylindrical.

**Orientation**

The device of the invention has a compression axis. The device is preferably adapted and arranged to apply force to the sintering chamber along the direction of the compression axis.

It is preferred for the first punch to be movable along the compression axis. It is preferred for the second punch to be movable along the compression axis. It is preferred for both punches to be movable along the compression axis.

In one embodiment, the compression axis is substantially vertical, preferably with the first punch positioned above the second punch. In an aspect of this embodiment, the first punch surface is preferably a lower surface of the first punch. In another aspect of this embodiment, the first punch surface is substantially horizontal. In another aspect of this embodiment, the second punch surface is preferably an upper surface of the second punch. In another aspect of this embodiment, the second punch surface is substantially horizontal.

**Die contact surface**

A die contact surface of a punch is defined as a surface of a punch that is adapted and arranged to be in physical contact with the interior surface of the die during the sintering process. A preferred die contact surface is parallel to the compression axis.

**Product**

The product of the invention is a ceramic body. The ceramic body preferably has a higher density than the plurality of particles. A preferred body is a contiguous object. A preferred body has a value of density divided by theoretical density of at least 0.9, preferably at least 0.95, more preferably at least 0.99.

A preferred ceramic is an inorganic material. A preferred ceramic is non-metallic. Some preferred ceramics are oxides, nitrides, carbides, or combinations thereof. A preferred ceramic is a refractory material.

A preferred oxide ceramic may be the oxide of a single element, or a mixed oxide of more than one element. An oxide ceramic may comprise some nitride or carbide content or both. An oxide ceramic may be free of nitride or free of carbide or free of both. A preferred ceramic oxide may be stoichiometric or non-stoichiometric. A stoichiometric oxide preferably has whole number ratios between the number of atoms of its constituent elements. An oxide ceramic may contain two or more groupings of elements, each element being in a stoichiometric ratio to each other elements of its own grouping, but in a non-stoichiometric ratio to each member of other groupings.

A preferred nitride ceramic may be the nitride of a single element, or a mixed nitride of more than one element. A nitride ceramic may comprise some oxide or carbide content or both. A nitride ceramic may be free of oxide or free of carbide or free of both. A preferred ceramic nitride may be stoichiometric or non-stoichiometric. A stoichiometric nitride preferably has whole number ratios between the number of atoms of its constituent elements. A nitride ceramic may contain two or more groupings of elements, each element being in a stoichiometric ratio to each other elements of its own grouping, but in a non-stoichiometric ratio to each member of other groupings. A preferred carbide ceramic may be the carbide of a single element, or a mixed carbide of more than one element. A carbide ceramic may comprise some oxide or nitride content or both. A carbide ceramic may be free of oxide or free of nitride or free of both. A preferred ceramic carbide may be stoichiometric or non-stoichiometric. A stoichiometric carbide preferably has whole number ratios between the number of atoms of its constituent elements. A carbide ceramic may contain two or more groupings of elements, each element being in a stoichiometric ratio to each other elements of its own grouping, but in a non-stoichiometric ratio to each member of other groupings.

A preferred constituent element of the ceramic is yttrium. The ceramic may contain at least 20 wt. % yttrium atoms, based on the total weight of the ceramic, preferably at least 30 wt. %, more preferably at least 40 wt. %, most preferably at least 45 wt. %. The content of yttrium might be as high as 50 wt. %, or even more. A preferred yttrium containing ceramic comprises oxide. A preferred yttrium containing ceramic is an oxide ceramic, preferably a mixed oxide ceramic, comprising atoms of one or more elements distinct from yttrium and oxygen. A mixed oxide ceramic is often quantified in terms the content of simple oxides which would be required to prepare it. A preferred yttrium containing mixed oxide ceramic comprises at least 20 wt. % yttrium oxide, based on the total weight of the ceramic, preferably at least 30 wt. %, more preferably at least 40 wt. %, most preferably at least 45 wt. %. The content of yttrium oxide might be as high as 50 wt. %, or even more.

Further to oxygen, nitrogen and carbon, some preferred elements present in the ceramic are one or more selected form the list consisting of yttrium, zirconium, aluminium, titanium, silicon, boron, phosphorus and beryllium. These elements could be constituents of oxides, nitrides, carbides or combinations thereof.

Oxygen-containing ceramics are often quantified in terms the content of simple oxides which would be required to prepare them. Some preferred oxide constituents are, silica, boria, beryllium oxide, yttrium oxide, aluminum oxide, zirconium oxide, titanium oxide, silicon dioxide, quartz, calcium oxide, cerium oxide, nickel oxide, copper oxide, strontium oxide, scandium oxide, samarium oxide, hafnium oxide, vanadium oxide, niobium oxide, tungsten oxide, manganese oxide, tantalum oxide, terbium oxide, europium oxide, neodymium oxide, yttrium aluminate oxide, zirconium aluminate oxide, lanthanum oxide, lutetium oxide and erbium oxide.

Some preferred mixed oxides are one or more selected from the group consisting of: zirconium silicate oxide, hafnium aluminate oxide, hafnium silicate oxide, titanium silicate oxide, lanthanum silicate oxide, lanthanum aluminate oxide (LAO), yttrium silicate oxide, titanium silicate oxide, tantalum silicate oxide, oxynitride, barium titanate, lead titanate and lead zirconate titanate.

Nitrogen-containing ceramics are often quantified in terms the content of simple nitrides which would be required to prepare them. Some preferred nitride constituents are one or more selected from the group consisting of: silicon nitride, titanium nitride, yttrium nitride, aluminum nitride, boron nitride, beryllium nitride and tungsten nitride.

Carbon-containing ceramics are often quantified in terms the content of simple carbides which would be required to prepare them. Some preferred carbides constituent are silicon carbide, tungsten carbide, chromium carbide, vanadium carbide, niobium carbide, molybdenum carbide, tantalum carbide, titanium carbide, zirconium carbide, hafnium carbide and boron carbide.

The ceramic may comprise one or more borides. Some preferred boride constituents of the ceramic are one or more selected from the group consisting of: molybdenum boride, chromium boride, hafnium boride, zirconium boride, tantalum boride and titanium boride or titanium diboride. Some preferred ceramic species are one or more selected from the group consisting of: sapphire, alumina, yttrium aluminium monoclinic (YAM), preferably $Y_4Al_2O_9$, yttrium aluminum garnet (YAG), preferably $Y_3Al_5O_{12}$, yttrium aluminum perovskite (YAP), preferably YAlO$_3$, cordierite, mullite, magnesium aluminate spinel, zirconia, erbium aluminum garnet (EAG), yttrium oxynitride, silicon oxynitride, and forsterite.

**Starting Materials**

According to the invention, a plurality of particles in the sintering chamber can be converted into a body by application of pressure and electrical current. The particles may have the same chemical composition as the product. The preferred chemical compositions for the product are also preferred chemical compositions for the particles.

A preferred size for the particles is in the range from 0.1 $\mu$m to 20 $\mu$m. A preferred average size for the particles is in the range of 0.3 $\mu$m to 7 $\mu$m, more preferably in the range of 0.5 $\mu$m to 5 $\mu$m.

**Process conditions**

The sintering of the particles proceeds under pressure. A pressure of at least 1 MPa is applied to the particles in the sintering chamber, preferably at least 5 MPa, more preferably at least 10 MPa. The pressure applied may be in the range from 15 MPa to 30 MPa. Pressures of up to around 80 MPa or even more may be applied.

The sintering of the particles proceeds with application of an electric current. Preferably, an electric current of at least 5 kA is applied across the sintering chamber, more preferably at least 10 kA, more preferably at least 50 kA. Electrical currents of up to 100 kA or even greater can be applied.

The process is preferably performed in a non-oxidising atmosphere. The process may be performed in a vacuum, the gas pressure around the device being less than 10 mPa, preferably less than 5 mPa, more preferably less than 1 mPa. The process may be performed in an inert atmosphere, preferably argon.

In an aspect of the invention, it is preferred that during a process, according to the invention, for the preparation of a ceramic body, a potential difference is applied between a first punch surface and a second punch surface of a device according to the invention, wherein the potential difference is in the range of 5 V to 10 V, more preferably in the range of 5 V to 7 V, and further preferably in the range of 6 V to 6.5 V.

**Technical applications**

The ceramic body finds use in various technical applications. Some particular applications are one or more selected form the list consisting of: a plasma etcher, a plasma processing chamber (etch or deposition processes), a wear plate for a bearing or a mill liner of a grinding mill.

**Electrical Power Source**

The electrical power source is preferably adapted and arrange for producing Joule heating in the plurality of particles. The electrical power source may be alternating current, pulsed direct current or continuous direct current. Continuous direct current is preferred.

In an aspect of the invention, it is preferred that the electrical power source is a rectified DC power source. A rectified DC power source should preferably be understood to mean an electrical power source that is adapted and arranged to convert an alternating current to a direct current. Examples of a rectified DC power source is an electrical power source that is adapted and arranged to perform partial-wave rectification, full-wave rectification (e.g., a bridge rectifier), or both. A preferred rectified DC power source comprises a thyristor, a silicon controlled rectifier, or both.

The electrical power source is preferably adapted and arranged to provide a current of at least 5 kA, more preferably at least 10 kA, even more preferably at least 50 kA, further preferably at least 60 kA, and even further preferably at least 100 kA.

**FIGURES**

The invention is now further elucidated with the aid of the following figures. The figures are not drawn to scale.

Figure 1A          is a cross sectional side-view of a device according to the invention.
Figure 1B          is an enlargement of the die and the punches.
Figure 2A          is a cross sectional side-view of the device of Figure 1 with the chamber loaded and ready for sintering.

Figure 2B                    is an enlargement of the die and the punches of Figure 2A.

Figure 3                     shows the steps of a preparation process for the ceramic body.

Figure 4                     shows a cutaway cross-section of the sinter chamber.

Figures 5a and 5b            show the core test employed herein.

Figures 6A and 6B            show possible orientations of the die and the punches prior to, and during sintering.

**Figure Descriptions**

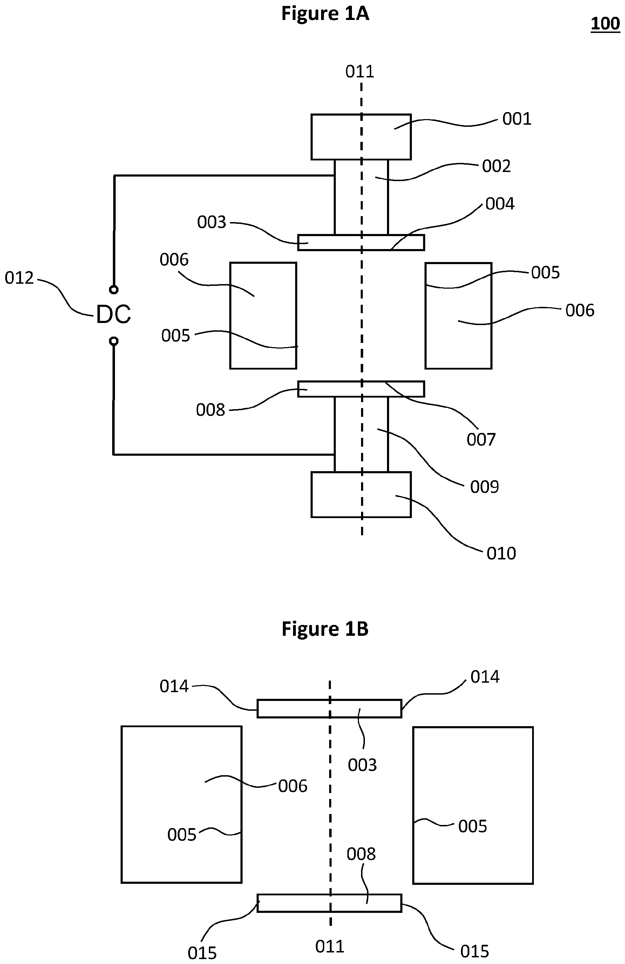

Figure 1A is a cross sectional side-view of a device 100 according to the invention. The device has a first punch 003 having a first punch surface 004 and a second punch 008 having a second punch surface 007. The punches 003 and 008 are made of solid graphite. The punch surfaces 004 and 007 are also of graphite. The first punch 003 is positioned above the second punch 008. The first punch 003 is oriented with the first punch surface 004 being horizontal and facing downwards. The first punch 003 can be moved in a vertical direction by a first pushing means 001 connected via a first piston 002. The second punch 008 is oriented with the second punch surface 007 horizontal and facing upwards. The second punch 008 can be moved in a vertical direction by a second pushing means 010 connected via a second piston 009. The first 004 and second 007 punch surfaces can thus be moved towards each other along the direction of a compression axis 011.

The device has a die 006 shaped as a hollow graphite cylinder with an interior surface 005. The device has an electrical power source 012 adapted and arrange to supply DC current and is connected to the first 003 and second 008 punches. The sintering chamber of the invention is formed as a cavity bordered by the first punch surface 004 from above, the second punch surface 007 from below, and the interior surface 005 to the sides. In this case, both punch surfaces 004 and 007 are circular and the interior surface 005 is cylindrical and the sintering chamber is thus cylindrical.

Figure 1B is an enlargement of the first and second punches (003, 008), and the die 006 of Figure 1A. Figure 1B shows that the first punch 003 has a die contact surface 014 (the first punch 003 is circular). Similarly, the second punch 008 also has a die contact surface 015 (the first punch 008 is also circular).

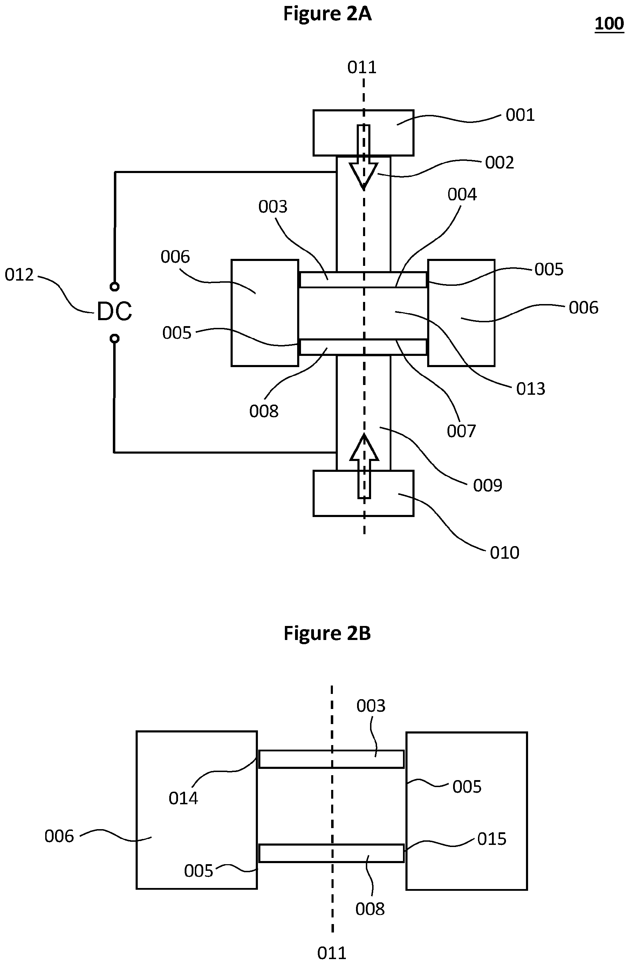

Figure 2A is a cross sectional side-view of the device 100 of Figure 1A with the sintering chamber 013 loaded and ready for sintering. The sintering chamber 013 is defined by the first punch surface 004 from above, the second punch surface 007 from below and the interior surface 005 of the die 006 to the sides. The sintering chamber 013 thus has a cylindrical shape. The sintering chamber 013 is filled with a plurality of particles for sintering. The plurality of particles may be tamped after introduction into the sintering chamber to compact it. The punch surfaces (004, 007) are then moved inwards to abut against the compacted disc of particles. For sintering, the punch surfaces (004, 007) are moved inwards along the compression axis 011 as shown by the arrows. The punch surfaces (004, 007) apply a force to the particles thus creating a pressure in the chamber. An electrical current is applied across the sintering chamber 013 (between the first punch surface 004 and the second punch surface 007) from the electrical power source 012.

Figure 2B is an enlargement of the first and second punches (003, 008), and the die 006 of Figure 2A. As can be seen, the interior surface 005 of the die 006 is in contact with the die contact surfaces (014, 015) of the first punch 003 and the second punch 008 prior to, and during the sintering process.

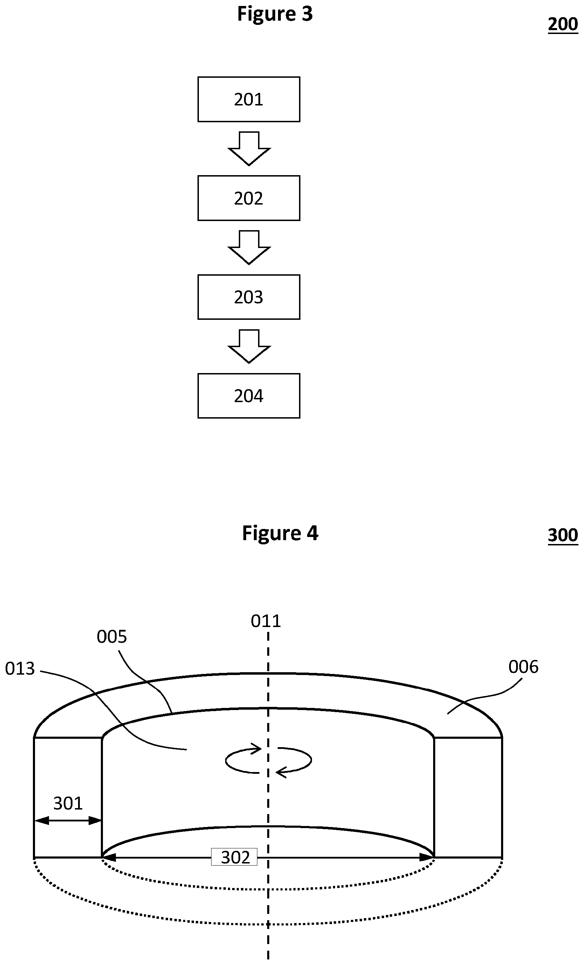

Figure 3 shows the steps of a preparation process 200 for the ceramic body. In a first step a. 201, a plurality of particles is provided. The particle size $d_{50}$ may be for example 3 $\mu$m. An example material for the particles is yttrium aluminium garnet (YAG). In a second step b. 202, a device as described in this disclosure is provided. The sintering chamber of the device may for example have a diameter of 500 mm. In a third step c. 203, the plurality of particles is introduced into the sintering chamber of the device. The plurality of particles can be tamped to compact the particles into a cylinder. In a fourth step d. 204, a pressure of, for example, 50 MPa is applied to the sintering chamber and a current of, for example 80 kA, is passed through the chamber to convert the particles into the product ceramic body.

Figure 4 shows a cutaway cross-section 300 of the sintering chamber 013. The cut is vertical, along a diameter of the sintering chamber 013, passing through the compression axis 011, to show the sintering chamber 013 from the side. The die 006 is a hollow cylinder with a wall thickness 301. The die thickness 301 and the diameter 302 of the sintering chamber 013 are each measured in a radial direction, perpendicular to the compression axis 011.

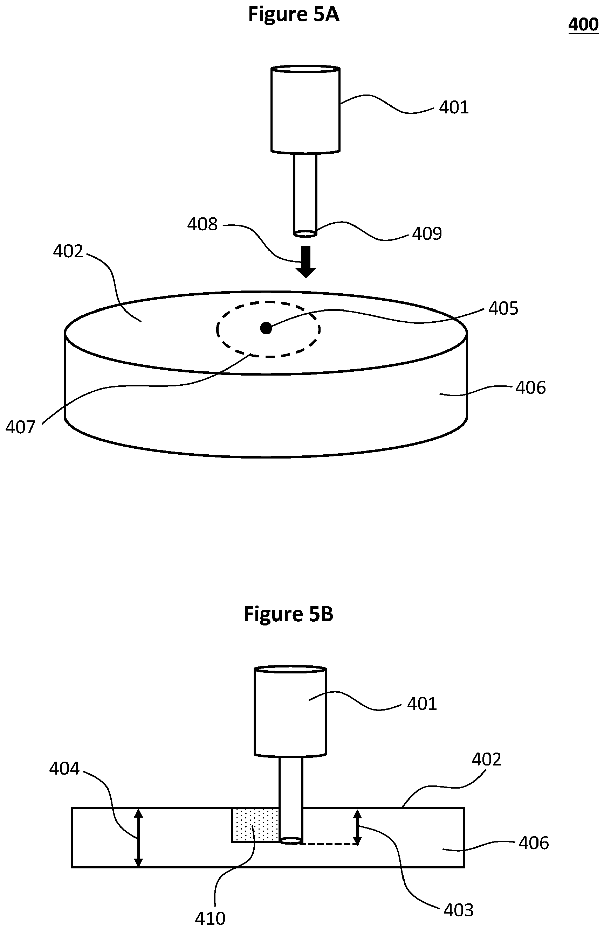

Figures 5a and 5b show the core test 400 employed herein. Figure 5a shows a perspective view prior to commencement of the test. A coring tool 401 is positioned above a first flat surface 402 of a flat-form ceramic sample 406. In this case, the flat-form ceramic sample 406 is in the form of a cylindrical disc. The tool 401 is oriented along an axis perpendicular to the first flat surface 402. The arrow 408 shows the direction of the travel of the tool 401 along the axis towards the flat-form ceramic sample 406. Once in contact with the flat-form ceramic sample 406, the coring tool 401 moves in a circular motion inside a coring region 407 that has a diameter that is larger than a diameter of a tip 409 of the coring tool 401. The circular motion is parallel to the first flat surface 402, and leads to the removal of a cylindrical region from the flat-form ceramic sample 406.

Furthermore, a geometric centre 405 of the first flat surface 402 is also the geometric centre 405 of the coring region 407. Figure 5b shows a cutaway view from the side during the core test. The tool 401 has advanced a distance 403 into the flat-form ceramic sample 406, which has a sample thickness 404. Figure 5b shows that the coring tool 401 has removed a cylindrical section 410 from the flat-form ceramic sample 406. The distance 403 is determined between the first flat surface 402 and the end of the tool 401. The test finishes at the first observation of cracks in the flat-form ceramic sample 406. The success level is determined as the ratio of the distance cored 403 to the total thickness of the flat-form ceramic sample 404 at the end of the test, expressed as a percentage.

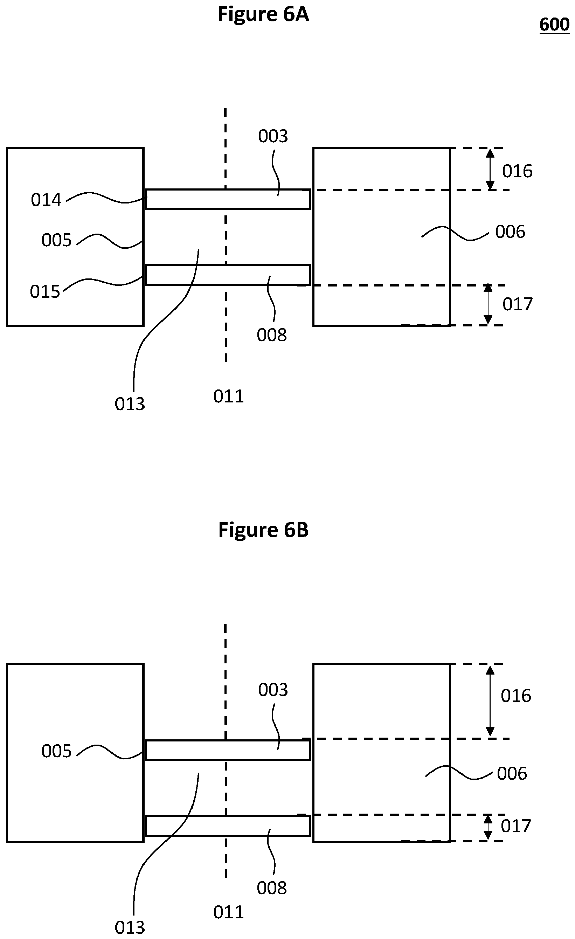

Figure 6A and 6B show possible orientations of the die and the punches prior to, and during sintering. Figures 6A and 6B are enlargements of the die and punches in Figure 2A. Figure 6A shows the preferred orientation, where the first and second punches (003, 008) are arranged with respect to the die 006 such that the distance 016 and 017 (indicated by the arrows) vary by less than 3 % from each other. This orientation can be achieved by choosing a die 006 with an interior surface 006 that has a sufficiently large mean surface roughness (Sa). In addition to choosing a sufficiently large mean surface roughness for the interior surface 005, additional improvements in the orientation can be obtained by also choosing a sufficiently large mean surface roughness (Sa) for the die contact surface 014 of the first punch 003 and/or for the die contact surface 015 of the second punch 008.

Figure 6B shows the orientation, when the interior surface 005 of the die 006 is too smooth, *i.e.,* the value of the mean surface roughness (Sa) is too small. As can be seen in Figure 6B, the distance 016 is significantly larger than the distance 017.

**Test Methods**

Core Test

A flat-form sample ceramic having a first flat face and a thickness perpendicular to the first flat face, obtained in the examples, is cored to determine if there is excess internal stress. The coring tool 401 is a 10 mm diamond coring tool commercially available, for example from Schott Diamantwerkzeuge GmbH of Stadtoldendorf, Germany. The tool is used in commercially available CNC machines to cut a core in in the part under test. The hole formed in the part by cutting the core is from 56 mm to 60 mm, having a nominal diameter of 58 mm. The core is cut by passing the tool 401 over the surface of the part in a helical pattern to bore a hole in the part. Suitable CNC machines that can be used for this test are available, for example, from DMG Mori Company Limited of Los Angeles, California, USA, such as its Ultrasonic 60 eVo linear model. Another provider of suitable CNC machines is Fair Friend Ent. Co. Ltd. Of Taiwan, such as the Feeler HV-1650 model. The test concludes either when the core extends all the way through the sample ceramic or when the sample ceramic is observed to crack, whichever occurs first. The success score is given as the percentage of the thickness of the core cut in the sample under test. 100% success rating indicates low internal stress if any; above 75% but below 100% success rating indicates low internal stress; 25% to 75% success rating indicates corresponds to medium stress; lower than 25% success rating indicates high internal stress.

Surface roughness

The mean surface roughness, Sa, (also known as the arithmetical mean height) is measured using the standard ISO 25178:2019. The maximum height (Sz), the texture aspect ratio (Str), the arithmetic mean peak curvature (Spc), and the developed interfacial are ratio (Sdr) are also measured using the standard ISO 25178:2019. To measure the surface roughness, a VK-X200 3D laser scanning microscope, commercially available from Keyence Corporation (Japan), is used.

Particle size and average particle size

Particle size and the average particle size of the ceramic particles were determined using a Laser Scattering Particle Size Distribution Analyzer, Model LA-960, from Horiba Scientific of Piscataway, New Jersey in the United States.

Current strength, potential difference, and resistance

The current strength is measured using a MicroFUSION 400A silicon-controlled rectifier (SCR), which is commercially available from Control Concepts Inc. (USA). The potential difference is measured using a DSCA31 analog voltage input signal conditioner, which is commercially available from Dataforth Corporation (USA). Resistance is obtained by dividing the potential difference by the current strength.

Density and theoretical density

The density of the ceramic body is measured according to the standard ASTM B962 - 17. The theoretical density is calculated from x-ray diffraction (XRD) data. From the XRD data, the unit cell parameters a, b and c are obtained. Using the unit cell parameters, the unit cell volume is calculated. Based on the crystal structure of the material, the number of molecular units present in every unit cell is determined. The molecular weight of the ceramic body is known as its chemical structure is known. Using the foregoing data, the theoretical density is calculated as follows:

$$\text{Theoretical density} = (\text{Molecular weight} \times \text{No. of molecules per unit cell}) / (\text{Volume of unit cell} \times \text{Avogardo's number}).$$

Average grain size

The average grain size of the ceramic body is measured according to the standard ASTM E112-13 (2021).

**Examples**

The working of the invention is now further elucidated with the aid of specific examples. The invention is not limited by the features of the examples, which are intended to provide a specific concrete realisation of the invention.

**Example A**

A device is provided according to the schematic shown in Figure 1. The die has a height of 1 m and the punches each have a circular punch surface of diameter 650 mm. The sintering chamber correspondingly had cylindrical shape of cross-sectional diameter 650 mm.

Commercially available yttrium oxide and aluminium oxide powders having a particle size $d_{50}$ of 3 $\mu$m were mixed together and 5 kg of the mixture introduced into the sintering chamber, spread to an approximately level height and compacted with a force of about 40 tons to a compacted height of 20 mm. After sintering, this powder mixture forms yttrium aluminium garnet (YAG). Next, a mixture of commercially available powders were introduced into the sintering chamber for producing zirconia toughened alumina (ZTA) when sintered, in amount of 27 kg and spread to an approximately even of height of about 100 mm. Finally, a mixture of the powders for forming YAG and ZTA were introduced into the sintering chamber in an amount of 7 kg and spread to an approximately even height of about 30 mm.

The punches were moved inwards to arrive at a position as shown in Figure 2. Force was applied to the powder in the sintering chamber by the first and second punches to arrive at a sintering chamber pressure of around 15 MPa. 40 to 70 kA supplied via the punches was passed through the sintering chamber for a total of 9 to 10 hours. The product was a flat form cylindrical ceramic disc with a diameter of approximately 650 mm and thickness of approximately 26 mm.

The example was repeated using different values for the mean surface roughness (Sa) of the interior surface of the die and the die contact surfaces of the first punch and the second punch, as shown in Table 1. The density ratio in Table 1 is a value for the bulk density of the ceramic body divided by the theoretical density of the ceramic body. The grain size refers to the size of the crystallites, or crystals, of the ceramic body.

While the foregoing examples were of cylindrical ceramic disc of three layers, the method disclosed herein is also suitable for such discs of single and two layer forms.

**Example B**

Example B is performed in the same manner as Example A, but with a 100 mm circular diameter for the punch surfaces. The results are also shown in Table 1 below. The resistance in Table 1 is the resistance measured over the die.

**Table 1**

| Experiment | Punch surface diameter [mm] | Mean surface roughness (Sa) [μm] | Core test success [%] | Resistance* [%] | Density ratio | Orientation between punches and die ** |
|---|---|---|---|---|---|---|
| A1 | 622 | 0.5 | 10 % | 0 | 0.90 | Unacceptable |
| A2 | 622 | 1 | 70 % | 0.4 | 0.99 | Acceptable |
| A3 | 622 | 2 | 97 % | 0.7 | 0.99 | Good |
| A4 | 622 | 4 | 100 % | 1.0 | 0.99 | Very good |
| A5 | 622 | 6 | 96 % | 1.1 | 0.99 | Very good |
| A6 | 622 | 8 | 80% | 1.2 | 0.99 | Very good |
| A7 | 622 | 10 | 15 % | 1.3 | 0.90 | Very good |
| | | | | | | |
| B1 | 100 | 0.5 | 100 % | 0 | 0.99 | Very good |
| B2 | 100 | 1 | 100 % | 0 | 0.99 | Very good |
| B3 | 100 | 2 | 100 % | 0 | 0.99 | Very good |
| B4 | 100 | 4 | 100 % | 0 | 0.99 | Very good |
| B5 | 100 | 6 | 100 % | 0 | 0.99 | Very good |
| B6 | 100 | 8 | 100 % | 0 | 0.99 | Very good |
| B7 | 100 | 10 | 100 % | 0 | 0.99 | Very good |

* The values for the resistance in Table 1 are given as a percentage increase from a value of 0.461 nΩ. The percentage increase is calculated as follows:

$$\% \text{ increase} = |0.461 - \text{value measured for experiment}| / 0.461 \times 100\,\%.$$

** The orientation of the punches and the die is acceptable when the distances 016 and 017 (see Figures 6A and 6B) vary by less than 3 %.

When the value of the surface roughness is too small, this leads to very limited friction between the die and the punches. As a result, the die and the punches become misaligned with respect to each other, leading to severe problems with the production with the ceramic body. If the value of the surface roughness is too large, this leads to increase electrical contact between the die and the punches, which in turn, leads to generation of additional heat in the sintering chamber during production of the ceramic body. The ceramic body subsequently obtained is of very inferior quality.

When considering the results in Table 1 for the punch surface with a circular diameter of 100 mm, there is no indication that the surface roughness should be limited to a specific range in order to produce sufficiently high-quality ceramic bodies with a diameter of 650 mm.

**Further examples**

The preceding examples A and B were repeated, but with the circular diameter for the punch surfaces being 300 mm and 500 mm respectively. It was found that for the 300 mm the results are very similar to those when the diameter is 100 mm (Example B). The results for a diameter of 500 mm is very similar to those of Example A.

**Reference list**

| | |
|---|---|
| 100 | Device according to the invention |
| 001 | First pushing means |
| 002 | First piston |
| 003 | First punch |
| 004 | First punch surface |
| 005 | Interior surface of die |
| 006 | Die |
| 007 | Second punch surface |
| 008 | Second punch |
| 009 | Second piston |
| 010 | Second pushing means |
| 011 | Compression axis |
| 012 | Electrical power source |
| 013 | Sintering chamber |
| 014 | Die contact surface of first punch |
| 015 | Die contact surface of second punch |
| 016 | Distance |
| 017 | Distance |
| | |
| 200 | Preparation process for ceramic body |
| 201 | Step a. |
| 202 | Step b. |
| 203 | Step c. |
| 204 | Step d. |
| | |
| 300 | Cross-section of sinter chamber |
| 301 | Wall thickness of die |
| 302 | Sinter chamber diameter |
| | |
| 400 | Core test setup |
| 401 | Coring tool |
| 402 | First flat surface |
| 403 | Drill depth |
| 404 | Sample thickness |
| 405 | Geometric centre |
| 406 | Flat-form ceramic sample |
| 407 | Coring region |
| 408 | Direction of motion perpendicular to flat-form ceramic sample |

409    Tip of coring tool
410    Cylindrical section removed from flat-form ceramic sample

**Claims**

1.  A device having a sintering chamber (013), the sintering chamber (013) being bordered by the following device parts:

    i. a first punch surface (004) of a first punch (003);
    ii. a second punch surface (007) of a second punch (008); and
    iii. an interior surface (005) of a die (006);
    wherein:

    the punches (003, 008) are adapted and arranged to apply a pressure of at least 1 MPa along a compression axis (011) to a target in the sintering chamber (013);
    the first punch (003) and the second punch (008) are connected to an electrical power source (012) adapted and arranged to provide a current of at least 10 kA;
    the first and second punches (003, 008) comprise at least 50 wt. % carbon, based on the total weight of the punch (003, 008);
    the sintering chamber (013) has a cross-sectional width W perpendicular to the compression axis (011) of at least 300 mm;

    wherein the die has a surface portion $\chi$ at least 5 cm$^2$ in area, wherein the surface portion $\chi$ is located on the interior surface of the die and wherein the surface portion $\chi$ has a mean surface roughness (Sa) in the range from 1 $\mu$m to 8 $\mu$m.

2.  The device according to claim 1, wherein the first punch has a surface portion $\alpha$ at least 5 cm$^2$ in area, the surface portion $\alpha$ having a mean surface roughness (Sa) in the range from 1 $\mu$m to 8 $\mu$m

3.  The device according to claim 2, wherein the surface portion $\alpha$ at least partially overlaps with the first punch surface.

4.  The device according to claim 3, wherein the surface portion $\alpha$ at least partially contacts with the surface portion $\chi$.

5.  The device according to any of the preceding claims, wherein the second punch has a surface portion $\beta$ at least 5 cm$^2$ in area, the surface portion $\beta$ having a mean surface roughness (Sa) in the range from 1 $\mu$m to 8 $\mu$m.

6.  The device according to claim 5, wherein the surface portion $\beta$ at least partially overlaps with the second punch surface.

7.  The device according to any of the preceding claims, wherein the device comprises one or more further device-parts selected from the list consisting of:

    a. a housing;
    b. a vacuum apparatus;
    c. a hydraulic piston.

8.  A process for the preparation of a ceramic body, comprising the steps:

    a. providing a plurality of particles;
    b. providing a device according to any of the preceding claims 1 to 7;
    c. introducing the particles into the sintering chamber (013);
    d. applying a pressure P in the range from 1 MPa to 50 MPa to the plurality of particles in the sintering chamber and an electrical current I in the range from 10 kA to 100 kA to obtain the ceramic body.

9.  The process according to claim 8, wherein the particles contain at least 30 wt. % yttrium in any chemical form, based on the total mass of yttrium atoms and the total mass of the particles.

10. A ceramic body obtainable by a process according to claims 8 or 9.

11. The ceramic body according to claim 10, wherein at least one or all of the following are satisfied:

    a. A value for density divided by theoretical density that is less than 1.0;
    b. An average grain size of less than 5 $\mu$m;
    c. A standard deviation for the average grain size distribution that is in the range of 1.8 $\pm$ 2 $\mu$m to 2.2 $\pm$ 2 $\mu$m.

12. An assembly comprising a ceramic body according to claims 10 or 11.

13. The assembly according to claim 12, the assembly being selected from the group consisting of:

    a. A plasma etcher,
    b. Plasma processing chamber (etch or deposition processes),
    c. A wear plate for a bearing, and
    d. A mill liner of a grinding mill.

14. Use of a die for preparing a ceramic body having an extension of at least 300 mm by spark plasma sintering, wherein the die has a surface portion at least 5 cm$^2$ in area, the surface portion having a mean surface roughness (Sa) in the range from 1 $\mu$m to 8 $\mu$m.

## Figure 1A

100

## Figure 1B

## Figure 2A

<u>100</u>

## Figure 2B

## Figure 3

200

201

202

203

204

## Figure 4

300

011

005

013

006

301

302

## Figure 5A

400

## Figure 5B

## Figure 6A

## Figure 6B

Europäisches
Patentamt
European
Patent Office
Office européen
des brevets

# EUROPEAN SEARCH REPORT

**Application Number**

EP 22 20 4704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/072703 A1 (HERAEUS CONAMIC NORTH AMERICA LLC [US]) 7 April 2022 (2022-04-07) * figures 1-3 * * paragraphs [0072], [0073], [0076], [0136], [0164], [0177] * | 1-14 | INV. B28B3/02 B22F3/105 B28B3/08 B28B11/24 B30B11/04 B30B15/34 C04B35/44 C04B35/645 B22F3/14 |
| A | US 2013/160492 A1 (VILLALOBOS GUILLERMO R [US] ET AL) 27 June 2013 (2013-06-27) * figures 1-2 * * claim 1 * | 1-14 | |
| A | US 9 096 471 B2 (SUZUKI DAISUKE [JP]; OYAMA SHIGERU [JP] ET AL.) 4 August 2015 (2015-08-04) * figures 1-13 * * column 8, line 59 - column 9, line 64 * | 1-14 | |

**TECHNICAL FIELDS SEARCHED (IPC)**

B28B
C04B
B30B
C22C
B22F

The present search report has been drawn up for all claims

| Place of search | Date of completion of the search | Examiner |
|---|---|---|
| The Hague | 29 March 2023 | Voltz, Eric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

**EP 4 360 839 A1**

## ANNEX TO THE EUROPEAN SEARCH REPORT
## ON EUROPEAN PATENT APPLICATION NO.

EP 22 20 4704

29-03-2023

| Patent document cited in search report | | Publication date | Patent family member(s) | | Publication date |
|---|---|---|---|---|---|
| WO 2022072703 | A1 | 07-04-2022 | TW | 202222740 A | 16-06-2022 |
| | | | WO | 2022072703 A1 | 07-04-2022 |
| US 2013160492 | A1 | 27-06-2013 | NONE | | |
| US 9096471 | B2 | 04-08-2015 | CN | 102574361 A | 11-07-2012 |
| | | | DE | 112010004589 T5 | 24-01-2013 |
| | | | JP | 5759902 B2 | 05-08-2015 |
| | | | JP | WO2011065457 A1 | 18-04-2013 |
| | | | US | 2013004791 A1 | 03-01-2013 |
| | | | WO | 2011065457 A1 | 03-06-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EUGENE A. OLEVSKY et al.** Fundamental Aspects of Spark Plasma Sintering: I. Experimental Analysis of Scalabilit. *J. Am. Ceram. Soc.,* 2012, vol. 95 (8), 2406-2413

- Fundamental Aspects of Spark Plasma Sintering: II. Experimental Analysis of Scalability. *J. Am. Ceram. Soc.,* 2012, vol. 95 (8), 2414-2422